# EUROPÄISCHE PATENTSCHRIFT

(11) **EP 1 438 167 B1**
(45) Veröffentlichungstag und Bekanntmachung des Hinweises auf die Patenterteilung: **29.06.2005**
(21) Anmeldenummer: 02779387.6
(22) Anmeldetag: 20.09.2002
(51) Int. Cl.: B29B 9/06, B29C 47/86

(54) **UNTERWASSERGRANULATOR MIT DREHGELENKIG GELAGERTER WASSERROHRLEITUNG**
UNDERWATER GRANULATOR COMPRISING A ROTATIONALLY ARTICULATED WATER PIPE
GRANULATEUR SOUS-MARIN POURVU D'UNE CONDUITE D'EAU RACCORDEE PAR UNE ARTICULATION TOURNANTE

(30) Priorität: 18.10.2001 DE 10151434
(43) Veröffentlichungstag der Anmeldung: 21.07.2004
(73) Patentinhaber: Berstorff GmbH, 30625 Hannover (DE)
(72) Erfinder: CHSZANIECKI, Siegfried, 30171 Hannover (DE); CHSZANIECKI, Gregor, 30625 Hannover (DE)
(74) Vertreter: Zollner, Richard, Dipl.-Phys.
(86) Internationale Anmeldenummer: PCT/EP2002/010574
(87) Internationale Veröffentlichungsnummer: WO 2003/035347

(56) Entgegenhaltungen:
- EP-A- 0 124 505
- FR-A- 848 596
- US-A- 3 287 764
- US-A- 4 321 026

## Beschreibung

Die Erfindung betrifft einen Unterwassergranulator gemäß dem Oberbegriff von Patentanspruch 1.

Bei einem Unterwassergranulator zerschneidet ein rotierendes Messerwerkzeug einer Schneidplatte eine Vielzahl von aus einem Extruder durch eine mit Düsenbohrungen versehene Lochplatte ausgedrückten Strängen aus erkalteter und fest gewordener Schmelze in kurze Stücke, die ein Granulat bilden. An die Schneidplatte schließt sich eine Kammer gefüllt mit Prozeßwasser an, das zur weiteren Verfestigung und zum Transport des Granulat dient. Das Granulat-Wasser-Gemisch wird über eine Ablauf-Rohrleitung zu einer Abscheidevorrichtung transportiert. In dieser wird das erstarrte Granulat vom Prozeßwasser getrennt und anschließend getrocknet. Der Unterwassergranulator ist im Betrieb an den Extruder angekoppelt, in der Regel angeflanscht. Für Wartungsarbeiten, beispielsweise ein Schneidplattenwechsel, muß der Granulator vom Extruder abgebaut werden. Aus Gründen des schnellen An- und Abbaus hat sich als vorteilhaft erwiesen, den Unterwassergranulator gelenkig an den Extruder anzubringen, so daß er zum Abbau von dem Extruder nur abgeklappt und zum Anbau nur hingeklappt werden muß.

Bei einem derartigen Klappgranulator verbleibt aber das Problem, dass die Prozeßwasserzu- bzw. -ableitung vor dem Wegklappen des Unterwassergranulators gelöst werden müssen und nach dem Hinklappen nach der Wartung zur erneuten Aufnahme des Arbeitsbetriebs wieder angeschlossen werden müssen. Um diesen Montageaufwand zu vermeiden, wäre denkbar, die Prozeßwasserzu- bzw. -ableitung als flexiblem Schlauch auszugestalten. Eine flexible Leitung ließe sich auch mit Kompensatoren aufbauen. Eine Schlauchverbindung ist aber sicherheitsproblematisch, da das Wasser im Granulierprozeß bis zu 90°C heiß werden kann, und austretendes Heißwasser aus undichten oder geplatzten Schläuchen ein Gefahrenpotential darstellt. Außerdem wird die konstruktive Freiheit durch die großen Biegeradien von Schläuchen stark eingeschränkt, so daß ein konstruktiver Aufbau mit Schlauchanschlüssen des Prozeßwassers oft unförmig und, im Verhältnis zur gesamten Granulieranlage, zu groß ausfallen. Beim Hin- und Wegklappen des Unterwassergranulators werden die Anschlußschläuche auf Torsion beansprucht, da sich die Anschlußstellen am Unterwassergranulator beim Klappen drehen. Diese Torsionsbelastung durch die Drehbewegung des Klappgranulators sind aber auf Dauer für die Schläuche schädlich. Schläuche sind nicht für dauerhafte In-Sich-Verdrehbewegungen geeignet. Daher wird üblicher Weise bei den Klappgranulatoren gemäß dem Stand der Technik die Verbindung vom Granulator zum Rohrsystem vor dem Wegklappen gelöst.

Der Erfindung liegt die Aufgabe zugrunde, einen gattungsgemäßen Unterwassergranulator zu schaffen, dessen Montage und Demontage am Extruder leicht zu handhaben ist.

Diese Aufgabe wird gelöst durch einen Unterwassergranulator mit den Merkmalen des Anspruchs 1. Vorteilhafte Weiterbildungen der Erfindung sind in den abhängigen Unteransprüchen angegeben.

Der erfindungsgemäße Unterwassergranulator zeichnet sich gegenüber den bekannten Unterwassergranulatoren gemäß dem Stand der Technik durch den Vorteil aus, dass das Zu- und Ableitungsrohr für Prozeßwasser zum Transport und zur Kühlung von Granulat beim Aufschwenken eines an- und abklappbaren Unterwassergranulators nicht mehr gelöst werden muß und dennoch auf Schlauchverbindungen verzichtet werden kann. Erfindungsgemäß weisen das Zu- und Ableitungsrohr dazu jeweils ein Drehgelenk auf, dessen Drehachse koaxial zur Schwenkachse des Unterwassergranulators ist. Die Ein- und Austrittsöffnungen des Prozeßwassers am Unterwassergranulator beschreiben deshalb bei einer Drehung des Unterwassergranulators den gleichen Kreisbogen wie die daran befestigten Rohrenden. Durch diese gelenkige Führung des Unterwassergranulators und des Zu- und Ableitungsrohrs um dieselbe Achse, tritt keine gegenseitige Hemmung auf, sondern Zu- und Ableitungsrohr und Unterwassergranulator schwenken gemeinsam als ein Block.

In einer vorteilhaften Ausgestaltung der Erfindung ist das Zu- und Ableitungsrohr jeweils zwischen Drehgelenk und Anschluß an den Unterwassergranulator s-förmig verschwenkt. Durch diese Verschwenkung wird in einfacher Weise der Versatz zwischen Schwenkachse des Unterwassergranulators, d. h. Drehachse des Zu- und Ableitungsrohrs und der Mittelachse der Ein- und Austrittsöffnungen des Prozeßwassers am Unterwassergranulator ausgeglichen.

Vorzugsweise ist das Zu- und Ableitungsrohr jeweils zwischen Drehgelenk und Anschluß an den Unterwassergranulator rund gebogen. Große Strömungswiderstände in dem Zu- und Ableitungsrohr werden somit vermieden.

Vorteilhafter Weise laufen das Zu- und Ableitungsrohr jeweils an seinem Anschluß an den Unterwassergranulator senkrecht und koaxial zueinander ein bzw. aus. Auf diese Weise gestalten sich die Strömungsverhältnisse im Unterwassergranulator einfach und die Geometrie des Anschlusses des Prozeßwassers der bestehenden Unterwassergranulatoren kann unverändert übernommen werden.

In einer besonders bevorzugten Ausführungsform der Erfindung wird der Unterwassergranulator durch das Zu- und Ableitungsrohr getragen. Auf diese Weise kann auf eine gesonderte Anlenkung des Unterwassergranulators verzichtet werden.

Um das Zu- und Ableitungsrohr sicher und verschleißarm schwenken zu können, weist das Drehgelenk des Zu- bzw. Ableitungsrohrs vorzugsweise ein Wälzlager auf.

Der Unterwassergranulator wird vorzugsweise zur Granulierung von thermoplastischen Massen in Compoundierprozessen verwendet.

In Zeichnungen ist eine Ausgestaltung der Erfindung dargestellt.

Es zeigen:
- Fig. 1: einen an einem Extruder angeschlossenen Unterwassergranulator mit einem verschwenkten Zu- und Ableitungsrohr für Prozeßwasser, wobei das Zu- und Ableitungsrohr jeweils zwischen einem verschwenkten Rohrabschnitt und einem geraden Rohrabschnitt ein Drehgelenk aufweisen, in einer perspektivischen Ansicht,
- Fig. 2: einen an einem Extruder angeschlossenen Unterwassergranulator nach Fig. 1 in einer Ansicht von oben,
- Fig.3: einen von einem Extruder weggeschwenkten Unterwassergranulator nach Fig. 1 in einer Ansicht von oben.

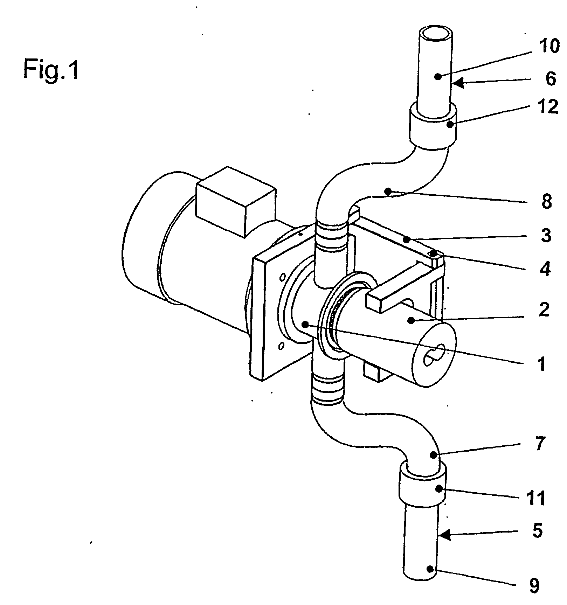

In Fig. 1 ist in einer perspektivischen Ansicht eine Ausführungsform des erfindungsgemäßen Unterwassergranulators 1 dargestellt. In dieser Abbildung ist der Unterwassergranulator 1 an einem Extruder 2 angeschlossen. Um das Anschließen des Unterwassergranulators 1 an den Extruder 2 und die Demontage zu erleichtern, ist dieser über einen Rahmen 3 um eine Schwenkachse 4 schwenkbar an dem Extruder 2 angelenkt. Zum Entfernen des Unterwassergranulators 1 wird dieser nach dem Lösen einer Befestigung von dem Extruder 2 weggeschwenkt. Der Unterwassergranulator 1 wird dabei von dem Rahmen 3 gehalten. Zu seinem erneuten Anschluß wird der Unterwassergranulator 1 an den Extruder 2 angeschwenkt und befestigt. Durch seine schwenkbare Anlenkung an den Extruder 2 sind zur Montage bzw. Demontage des Unterwassergranulators 1 keine hohen Kräfte erforderlich. An den Unterwassergranulator 1 ist ein Zuleitungsrohr 5 und ein Ableitungsrohr 6 für Prozeßwasser zum Kühlen und Transportieren von Granulat angeschlossen. Das Zuleitungsrohr 5 und das Ableitungsrohr 6 weisen jeweils unterhalb und oberhalb des Unterwassergranulators 1 einen s-förmig verschwenkten Rohrabschnitt 7, 8 und einen geraden Rohrabschnitt 9, 10 auf. Zwischen dem s-förmig verschwenkten Rohrabschnitt 7, 8 und dem geraden Rohrabschnitt 9, 10 ist jeweils ein Drehgelenk 11, 12 angeordnet, das jeweils ein Schwenken der s-förmig verschwenkten Rohrabschnitte 7, 8 ermöglicht Da die Schwenkachse 4 des Unterwassergranulators 1 und die Achsen der Drehgelenke 11, 12 zusammenfallen, werden der Unterwassergranulator 1 und die s-förmig verschwenkten Rohrabschnitte 7, 8 gleichermaßen im Block verschwenkt, ohne sich gegenseitig zu hemmen. Der Abstand der Schwenkachse 4 von dem Extruder 2 ist so groß bemessen, um hinreichenden Platz für Montagearbeiten zu gewährleisten.

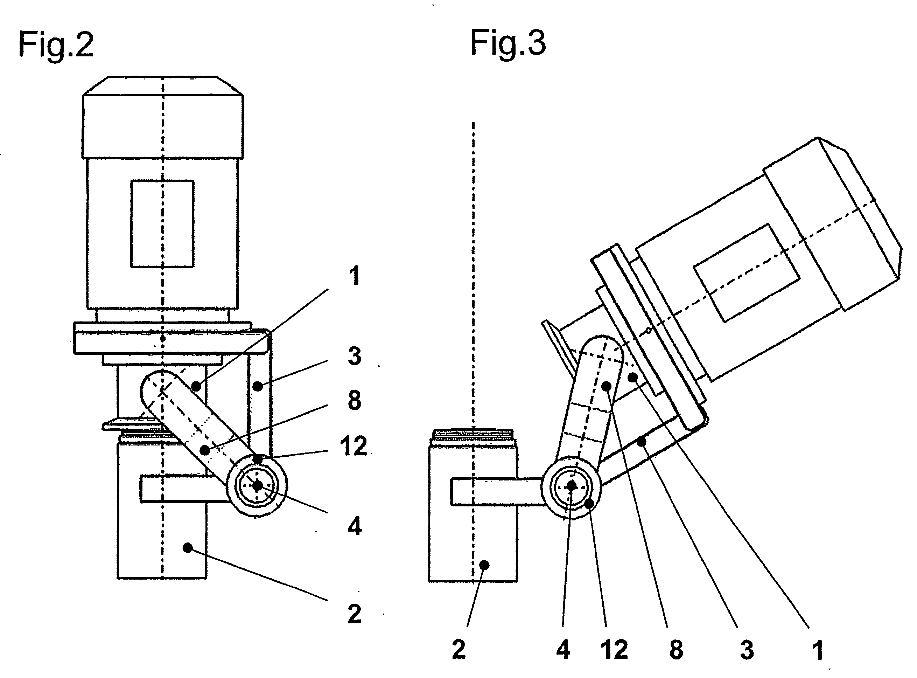

In Fig. 2 ist eine Aufsicht von oben eines an einem Extruder 2 angeschlossenen Unterwassergranulators 1 nach Fig. 1 dargestellt. Deutlich zu erkennen ist, dass die Schwenkachse 4 und die Drehachse des Drehgelenks 12 zusammenfallen. Diese Koaxialität der Schwenkachse 4 und der Drehachse der Drehgelenke 11 und 12 ist eine notwendige Bedingung, um einen Wasseranschluß ohne flexible Rohrleitungssysteme ausgestalten zu können, der bei der Demontage des Unterwassergranulators 1 nicht entfernt werden muß. Soll bei dem erfindungsgemäßen Unterwassergranulator 1 beispielsweise ein Schneidplattenwechsel stattfinden, wird zur Demontage des Unterwassergranulators 1 die Verbindung zum Extruder 2 gelöst und der Unterwassergranulator 1 und das aus Zuleitungsrohr 5 und Ableitungsrohr 6 bestehende Rohrleitungssystem für Prozeßwasser wird in einem Block als Ganzes nach rechts weggeschwenkt.

Fig. 3 zeigt den erfindungsgemäßen Unterwassergranulator 1 in diesem demontierten Zustand, bei dem der Unterwassergranulator 1 und das Rohrleitungssystem für Prozeßwasser in einem Block als Ganzes nach rechts weggeschwenkt sind. In diesem demontieren Zustand bleibt hinreichend Platz für Montagearbeiten am Unterwassergranulator 1 oder Extruder 2.

### Bezugszeichenliste

- 1: Unterwassergranulator
- 2: Extruder
- 3: Rahmen
- 4: Schwenkachse
- 5: Zuleitungsrohr
- 6: Ableitungsrohr
- 7: s-förmig verschwenkter Rohrabschnitt
- 8: s-förmig verschwenkter Rohrabschnitt
- 9: gerader Rohrabschnitt
- 10: gerader Rohrabschnitt
- 11: Drehgelenk
- 12: Drehgelenk

## Patentansprüche

1. Unterwassergranulator (1) mit einer Schneidplatte (4) und einem Zu (5)- und Ableitungsrohr (6) für Prozeßwasser zum Transport und zur Kühlung von Granulat, wobei der Unterwassergranulator (1) gelenkig an einen Extruder (2) anschwenkbar ist, **dadurch gekennzeichnet, dass** das Zu (5)- und Ableitungsrohr (6) jeweils ein Drehgelenk (11, 12) aufweisen, dessen Drehachse koaxial zur Schwenkachse (4) des Unterwassergranulators (1) ist.

2. Unterwassergranulator (1) nach Anspruch 1, **dadurch gekennzeichnet, dass** das Zu (5)- und Ableitungsrohr (6) jeweils zwischen Drehgelenk (11, 12) und Anschluß an den Unterwassergranulator (1) s-förmig verschwenkt ist.

3. Unterwassergranulator (1) nach Anspruch 1 oder 2, **dadurch gekennzeichnet, dass** das Zu (5)- und Ableitungsrohr (6) jeweils zwischen Drehgelenk (11, 12) und Anschluß an den Unterwassergranulator (1) rund gebogen ist.

4. Unterwassergranulator (1) nach Anspruch 2 oder 3, **dadurch gekennzeichnet, dass** das Zu (5)- und Ableitungsrohr (6) jeweils an seinem Anschluß an den Unterwassergranulator (1) senkrecht und koaxial zueinander ein- bzw. auslaufen.

5. Unterwassergranulator (1) nach einem der vorstehenden Ansprüche, **dadurch gekennzeichnet, dass** er durch das Zu (5)- und Ableitungsrohr (6) getragen wird.

6. Unterwassergranulator (1) nach einem der vorstehenden Ansprüche, **dadurch gekennzeichnet, dass** das Drehgelenk (11, 12) ein Wälzlager aufweist.

7. Verwendung eines Unterwassergranulators (1) nach einem der vorstehenden Ansprüche zur Granulierung von thermoplastischen Massen in Compoundierprozessen.

## Claims

1. Underwater granulator (1) with a cutting plate (4) and a feed pipe (5) and discharge pipe (6) for process water for transporting and cooling granules, the underwater granulator (1) being capable of being swivelled in an articulated manner to an extruder (2), **characterised in that** the feed pipe (5) and discharge pipe (6) each have a swivel joint (11, 12), the axis of rotation of which is coaxial to the swivel axis (4) of the underwater granulator (1).

2. Underwater granulator (1) according to claim 1, **characterised in that** the feed pipe (5) and discharge pipe (6) between the swivel joint (11, 12) and connection to the underwater granulator (1), in each case, are swivelled in an S-shape.

3. Underwater granulator (1) according to claim 1 or 2, **characterised in that** the feed pipe (5) and discharge pipe (6) are bent round in each case between the swivel joint (11, 12) and connection to the underwater granulator (1).

4. Underwater granulator (1) according to claim 2 or 3, **characterised in that** the feed pipe (5) and discharge pipe (6), at its connection to the underwater granulator (1) in each case, run in or out vertically and coaxially with respect to one another.

5. Underwater granulator (1) according to any one of the preceding claims, **characterised in that** it is carried by the feed pipe (5) and discharge pipe (6).

6. Underwater granulator (1) according to any one of the preceding claims, **characterised in that** the swivel joint (11, 12) has a roller bearing.

7. Use of an underwater granulator (1) according to any one of the preceding claims for granulating thermoplastic masses in compounding processes.

## Revendications

1. Granulateur sous-marin (1) doté d'une plaquette coupante (4) et de tuyaux d'arrivée (5) et d'évacuation (6) pour l'eau de traitement destinés au transport et au refroidissement du granulat, le granulateur sous-marin (1) pouvant être incliné par articulation sur une extrudeuse (2), **caractérisé en ce que** les tuyaux d'arrivée (5) et d'évacuation (6) comportent respectivement une articulation rotative (11, 12) dont l'axe de rotation est coaxial par rapport à l'axe d'inclinaison (4) du granulateur sous-marin (1).

2. Granulateur sous-marin (1) selon la revendication 1, **caractérisé en ce que** les tuyaux d'arrivée (5) et d'évacuation (6) sont respectivement inclinés en forme de S entre les articulations rotatives (11, 12) et le raccord au granulateur sous-marin (1).

3. Granulateur sous-marin (1) selon la revendication 1 ou 2, **caractérisé en ce que** les tuyaux d'arrivée (5) et d'évacuation (6) sont respectivement courbés en rond entre les articulations rotatives (11, 12) et le raccord au granulateur sous-marin (1).

4. Granulateur sous-marin (1) selon la revendication 2 ou 3, **caractérisé en ce que** les tuyaux d'arrivée (5) et d'évacuation (6) arrivent et partent respectivement perpendiculairement et coaxialement l'un par rapport à l'autre de leur raccord au granulateur sous-marin (1).

5. Granulateur sous-marin (1) selon l'une quelconque des revendications précédentes, **caractérisé en ce qu'**il est porté par les tuyaux d'arrivée (5) et d'évacuation (6).

6. Granulateur sous-marin (1) selon l'une quelconque des revendications précédentes, **caractérisé en ce que** l'articulation rotative (11, 12) comporte un palier à roulement.

7. Utilisation d'un granulateur sous-marin (1) selon l'une quelconque des revendications précédentes pour la granulation de masses thermoplastiques dans des procédés de fabrication de compound.
